# EUROPEAN PATENT APPLICATION

(11) **EP 0 662 340 A1**
(43) Date of publication of application: **12.07.1995**
(21) Application number: 95100130.4
(22) Date of filing: 05.01.1995
(51) Int. Cl.: B01D 63/06, B01D 63/14, B01D 27/06

(54) **Cartridge sorption device**

(30) Priority: 10.01.1994 US 179118
(71) Applicant: MINNESOTA MINING AND MANUFACTURING COMPANY, St. Paul, Minnesota 55133-3427 (US)
(72) Inventor: White, Lloyd R., c/o MINNESOTA MINING AND, Saint Paul, Minnesota 55133-3427 (US); Balsimo, William V., c/o MINNESOTA MINING AND, Saint Paul, Minnesota 55133-3427 (US); Ferguson, Bradley A., c/o MINNESOTA MINING AND, Saint Paul, Minnesota 55133-3427 (US)
(74) Representative: VOSSIUS & PARTNER

(57) **Abstract**

A cartridge absorbing device (10) including a particle-loaded fibrillated polytetrafluoroethylene membrane (21) removes one or more species contained in a fluid as particulate binds the species. The bound chemical species can be recovered by flushing the cartridge device with an eluent.

## Description

This invention describes a cartridge device including a fibrillated polytetrafluoroethylene membrane that entraps particulate which is active toward the species to be removed. When a fluid containing this species is allowed or caused to flow through the particulate-loaded membrane, the species is bound to the particulate and removed from the fluid.

The use of filters for the removal of suspended particles from fluids is well known and has been extensively described in the literature. These devices use size exclusion to remove contaminants. More particularly, a given filter has openings within a particular size range. Particles larger than the openings are caught by the filter and removed from the fluid. Particles smaller than the openings may pass through the filter. When the fluid is a gas, this normally is not a problem since any particulate is typically undesirable (and filters with very small openings can therefore be used). When the fluid is liquid, however, this size limitation can be problematic. By using a filter with very small openings, non-contaminant material as well as contaminant can be caught by the filter. If the openings are large enough to allow all non-contaminant material to pass, contaminants smaller than the openings are not removed.

To remove very small contaminants, filter membranes with very small openings of uniform size are required. When a membrane has such small openings, it must be very thin to achieve sufficient flux. Such thin membranes are more subject to structural failures such as tearing, punctures, and bursts and, concomitantly, less able to withstand increased pressure. A filtering membrane which claims to overcome these limitations is described in U.S. Patent No. 5,154,827.

Unlike filtration, sorption relies on a chemical or physical interaction between the sorbing species and the species to be absorbed (i.e., the contaminant) in order to remove the latter from a fluid. (Accordingly, sorption can be used to remove dissolved as well as suspended species.) Sorption is most often performed in columns packed with porous granules. Leading from the exterior to the interior of these granules are pores containing what may be termed active sites, i.e., reactive groups bound to the granule or present on the surfaces thereof. Optimally, the distance from the exterior of the granule to the active site which the contaminant must travel should be as small as possible. One way to do this is to minimize the size of the granule. However, the minimum size of such granules is limited by the following factors: the size of the openings in the screen used to support the granules in the column and the pressure drop developed by fluids passing through the column. Therefore, column-packing granules have a minimum size below which column sorption becomes impractical.

From the above, one can see that an sorptive device of optimal efficiency should incorporate very small sorptive granules without having an excessively high pressure drop.

In one aspect, the present invention provides a cartridge device for removing a species from a fluid comprising:
a) a hollow core;
b) a sheet comprising a particulate-loaded fibrillated PTFE membrane, the particulate being capable of binding the species, the sheet being pleated and joined to itself so as to form a cylinder that encircles the core;
c) two end caps which slide fit onto the core; and
d) means for securing the end caps to the core;

the end caps being sealed to the ends of the pleated membrane and the species being removed from the fluid by binding with the particulate.

In a further aspect, the present invention provides a method of removing a species from a fluid comprising the steps:
a) providing the above cartridge device;
b) allowing or causing a fluid containing the species to flow through the sheet of the cartridge device;
c) allowing the species to be bound to the active particulate entrapped in the fibrillated PTFE membrane.

If desired, a species so removed can be recovered by eluting with a proper eluent.

Unless otherwise indicated, the following definitions apply in the present application:
"species" means a chemical substance (e.g., a complex, molecule, or ion) that is solvated in a fluid;
"active", when used to describe particulate, means capable of binding a particular species;
"complex" means a complex compound or ion (also known as a coordination compound);
"bind" means to sorb or chemically react with a species; and
"sorb" or "sorption" or "sorptive" means adsorption or absorption.

By pleating a fibrillated PTFE membrane with active particulate entrapped therein, a large number of binding sites can be confined in a relatively small volume. The active particulate can be thought of as the porous granules used to pack separation columns. Unlike such packed columns, however, very small particles can be used in the cartridge device of the present invention. Use of very small particulate reduces the amount of time necessary to perform a separation.

When a fluid, preferably a liquid, is allowed to pass through the particle-filled fibrillated PTFE membrane of a cartridge absorber of the present invention, the entrapped particles preferentially bind one or more species present in the fluid. This preferential binding results in the separation of one or more chemical species from the fluid. Where purification of the fluid is desired, this is all that need be done. Where collection of the bound species is desired, however, an eluent can then be used to flush the absorbed species.

Although the devices of the present invention are herein referred to as cartridge absorbers, useful particulate need not be limited to sorptive particulate. For example, particulate that chemically reacts with the species to be removed can also be used in the fibrillated PTFE membranes of the cartridge devices of the present invention. Such sorptive or chemically reactive particulate remove the species of interest by means other than size exclusion, however.

The invention will be described in more detail in connection with the drawings, in which:
FIG. **1** is a perspective view, portions cut away, showing one embodiment of the cartridge absorption device of the present invention;
FIG. **2** is a cross sectional view of FIG. **1** taken along line 2;
FIG. **3** is a perspective view, with a portion broken away, showing a second embodiment of the cartridge absorption device of the present invention;
FIG. **4** is a greatly enlarged close up showing the elements of one pleat of the absorbing element of the second embodiment of the cartridge absorption device of the present invention;
FIG. **5** is an illustration showing a pattern of shapes embossed on the sheet of the absorbing element of the second embodiment of the cartridge absorption device of the present invention.

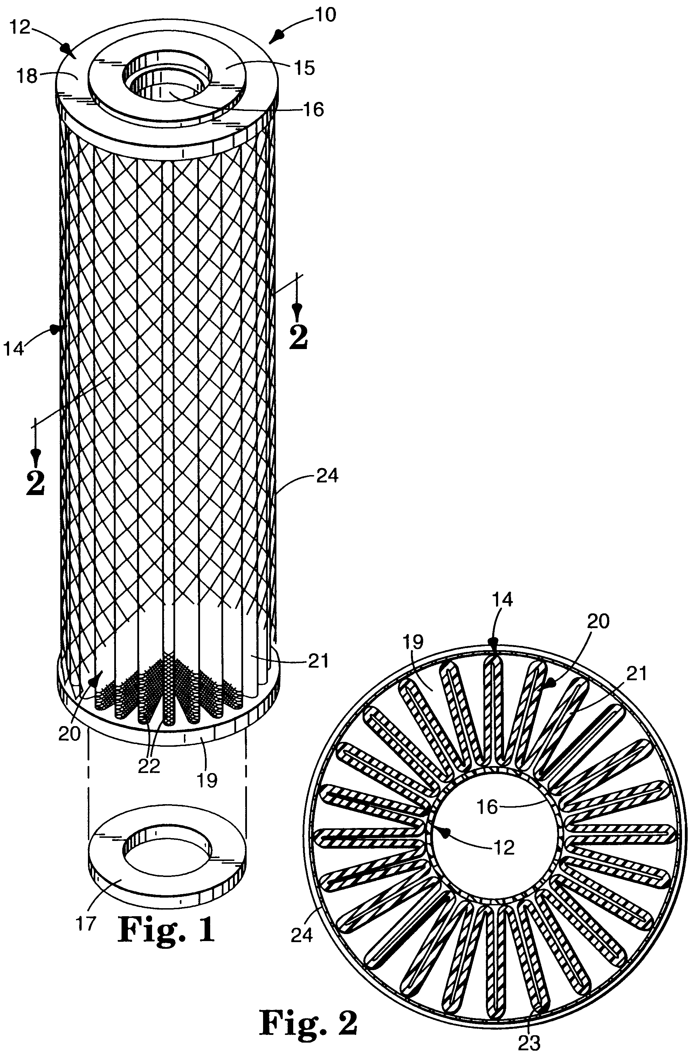

FIG. **1** shows a vertically pleated cartridge absorber 10 having cartridge housing 12 and binding assembly 14. Cartridge housing 12 includes hollow core 16, end cap 18, and end cap 19. Core 16 and end caps 18 and 19 are constructed of a metal such as stainless steel or a polymer such as polypropylene or nylon. Preferred among these materials is polypropylene. Where core 16 and end caps 18 and 19 are constructed of a metal, they can be attached to one another adhesively, for example by an epoxy resin. Where each is polymeric, they can be attached adhesively or by fusion bonding. Depending on the method used to seal core 16 to end caps 18 and 19, the presence of small recesses or depressions in end caps 18 and 19 (to receive core 16) might be desirable. Gaskets 15 and 17 (the latter of which is exploded away from cartridge housing 12 for clarity) are optionally attached to end caps 18 and 19 before cartridge absorber 10 is inserted into a holding device and subjected to fluid flow.

A typical cartridge housing that can be used in the present invention is commercially available from Memtec America Corp. (Timonium, MD) under the designation Model LMO-VS-10503/4.

Binding assembly 14 includes reinforced sheet 20, consisting of particle-loaded fibrillated PTFE membrane 21 with active particulate entrapped therein, and reinforcing means 22. Although not absolutely necessary to the practicing of the present invention, use of reinforcing means 22 is preferred. Preferred reinforcing means 22 include screens, which can be metallic or polymeric, and scrims, i.e., non-woven, fibrous polymeric webs preferably made from polymers such as nylon, polypropylene, and cellulose. Reinforcing means 22 is at least partially embedded in particle-loaded fibrillated PTFE membrane 21. Reinforced sheet 20 is pleated vertically (i.e., along the axis of cylinder 16) and one edge thereof is sealed, preferably adhesively, to the opposite edge. The method of making particle-loaded fibrillated PTFE membrane 21 and embedding reinforcing means 22 so as to form reinforced absorbing sheet 20 is described in U.S. Ser. No. 98/179,313.

To make a membrane in which are entrapped the active particulate, one begins with an aqueous PTFE dispersion. This milky-white dispersion contains about 20% to 70% (by weight) of minute PTFE particles suspended in water. A major portion of these PTFE particles range in size from 0.05 to about 0.5 µm. Commercially available aqueous PTFE dispersions may contain other ingredients such as surfactants and stabilizers that promote continued suspension. Examples of such commercially available dispersions include Teflon™ 30, Teflon™ 30B, and Teflon™ 42 (DuPont de Nemours Chemical Corp.; Wilmington, DE). Teflon™ 30 and Teflon™ 30B contain about 59% to 61% (by weight) PTFE solids and about 5.5% to 6.5% (by weight, based on the weight of PTFE resin) of a non-ionic wetting agent, typically octylphenyl polyoxyethylene or nonylphenyl polyoxyethylene. Teflon™ 42 contains about 32% to 35% (by weight) PTFE solids and no wetting agent (but does contain a surface layer of organic solvent to prevent evaporation).

Particle-loaded fibrillated PTFE membrane 21 preferably is prepared as described in any of U.S. Patent Nos. 4,153,661, 4,460,642, and 5,071,610, by blending the desired reactive particulate into the aqueous PTFE emulsion in the presence of sufficient lubricant to approach, or preferably, exceed the sorptive capacity of the solids yet maintain a putty-like consistency. This putty-like mass is then subjected to intensive mixing at a temperature preferably between 40° and 100°C to cause initial fibrillation of the PTFE particles. This resulting putty-like mass is then repeatedly and biaxially calendered with a progressive narrowing of the gap between the rollers (while at least maintaining the water content), until the shear causes the PTFE to fibrillate and enmesh the particulate and a layer of desired thickness is obtained. Removal of any residual surfactant or wetting agent by organic solvent extraction or by washing with water after formation of the web article is generally desirable. The resultant membrane is then dried. Such membranes preferably have thicknesses in the rage of 0.1 to 0.5 mm. Membranes with a thickness in the general range of 0.05 to 10 mm can be useful.

If a membrane with multiple particulate layers is desired, the component layers themselves are stacked on each other and calendered until they form a composite where the PTFE fibrils of the separate layers are entwined at the interface of adjacent membranes. Such multilayer membranes demonstrate little boundary mixing between adjacent layers of particles. Multilayer membranes preferably have thicknesses in the range of 0.1 to 10 mm.

The void size and volume within such a membrane can be controlled by regulating the lubricant level during fabrication as described in U.S. Patent No. 5,071,610. Because both the size and the volume of the voids can vary directly with the amount of lubricant present during the fibrillation process, membranes capable of entrapping particles of various sizes are possible.

Total particulate content of membrane 21 can range up to about 97% (by weight), although particulate amounts in the range of 80 to 95% (by weight) tend to produce more stable membranes. The enmeshing fibrils retain the enmeshed particulate within the matrix, and the enmeshed particles resist sloughing.

Non-active adjuvant particles with average diameters in the same ranges as listed previously with respect to active particulate can be included. Representative examples of useful adjuvants that can be incorporated in the membrane article include property modifiers such as glass beads and/or bubbles, glass particles other than beads or bubbles, energy-expandable hollow polymeric particles such as Expancel™ microspheres (Nobel Industries; Sundsvall, Sweden) and mica. When present, such non-active particulate can comprise from more than 0 to 95% (by weight), preferably from more than 0 to 50% (by weight), and most preferably from more than 0 to 10% (by weight) of membrane 21.

Once particle-loaded fibrillated PTFE membrane 21 is prepared, reinforcing means 22 can be at least partially embedded therein. This embedding step is normally done by a simple pressure-bonding process (i.e., adhesive-free), optionally at an elevated temperature. Reinforcing means 22 is preferably a screen or scrim. By "partially embedded" is meant that reinforcing means 22 is (a) at least partially depressed into membrane 21 to which is has been pressure bonded and (b) at least partially mechanically entangled with the fibrils of membrane 21.

Reinforced sheet 20 displays improved resistance to ballooning and/or tearing and to shrinkage. This is very desirable in applications where membrane must withstand a pressure drop caused by fluid glowing through it or must display dimensional stability. (Unreinforced fibrillated PTFE membranes tend to shrink in the direction in which they were last machined.) Also, reinforced membranes are easier to handle and less likely to be damaged during normal use.

If desired, fibrillated PTFE membrane 21 can be reinforced on both sides. In other words, reinforcement means 22 can be partially embedded in both sides of membrane 21. This can increase the resistance of reinforced sheet 20 to the aforementioned undesirable properties. Additionally, mutilayer membrane-reinforcing means composite articles also can be made. This might be desirable where each membrane layer contains a different type of particulate.

Reinforced sheet 20 is optionally enclosed within porous protective mesh sheath 24, commercially available from a variety of sources. Sheath 24 helps to protect reinforced sheet 20 during handling and use. Any porous mesh-like material can be used providing that the aforementioned protection is provided. Preferred materials include polymeric nets, especially those made of polypropylene, such as are available from Nalle Plastics, Inc. (Austin, TX) and Conweb Plastics (Minneapolis; MN).

Active particulate useful in the present invention include any particulate that can be immobilized in a fibrillated PTFE membrane and that can bind the species of interest. Representative examples include, but are not limited to, activated carbon, silica, derivatized silica, intercalated styrene divinylbenzene, ion exchange resins, and chitin.

Particulate material can be of regular (flat, spherical, cubic, rod- or fiber-like, etc.) or irregular shape. Average diameters of useful particles are within the range of 0.1 to 100 µm, more preferably within the range of 1 to 50 µm, and most preferably within the range of 5 to 30 µm. Such particulate can be incorporated directly into membrane 21. The enmeshing fibrils retain the enmeshed particulate, by entrapment or adhesion, within.the matrix, and the enmeshed particles resist sloughing.

Particulate is generally distributed uniformly in membrane 21, but membranes which include combinations of particulate can be prepared. Alternatively, layers containing different particulate can be calendered into a single membrane with distinct strata of particulate. Such multilayer composites show minimal boundary mixing (between the various particulate) and retain good uniformity throughout each layer. Whether in a heterogeneous or homogenous form, this type of membrane can selectively bind one or more species to be removed from a fluid.

Membrane 21 preferably comprises active particulate in an amount of at least 10% (by weight), more preferably comprises active particulate in an amount of at least 50% (by weight), and most preferably comprises active particulate in an amount of at least 80% (by weight). Membrane 21 can comprise particulate in an amount up to about 97% (by weight), although particulate amounts in the range of 85-90% (by weight) tend to produce more stable membranes. High active particulate loading is desirable to extend the absorptive capacity of membrane 21. Where cartridge absorber 10 is to be used in the removal of a metal from a solution, the particulate will preferentially bind that metal or a complex or salt thereof. For example, where gold is to be removed from a cyanide solution, activated carbon can be used as the active particulate. The carbon particles sorb an Au(CN)₂⁻ complex (along with the corresponding cation).

Binding assembly 14 can be attached to end caps 18 and 19 by any of a number of techniques as long as a fluid-impervious bond is achieved. Suitable techniques include adhesive attachment, solvent welding, spin welding, mechanical or thermomechanical attachment, and ultrasonic welding. This fluid-tight seal ensures that fluid flowing through cartridge absorber 10 must pass through binding assembly 14, particularly particle-loaded fibrillated PTFE membrane 21. As fluid passes through fibrillated PTFE membrane 21, active particulate entrapped therein preferentially bind the species to be removed. Typically, fluid enters cartridge absorber 10 through binding assembly 14 and exits through one or both of the openings in central core 16, although the opposite flow arrangement is also possible.

FIG. **2** shows a cross section of cartridge absorber 10 of FIG. 1 taken along line 2. Central core 16, adhesively attached to end cap 19, is surrounded by pleated reinforced sheet 20 comprising particle-loaded fibrillated PTFE membrane 21 and reinforcing means 22. One edge of pleated reinforced sheet 20 is connected to the opposite edge thereof at seal 23. Protective mesh 24 optionally surrounds sheet 20. Fluid entering cartridge absorber 10 through mesh sheath 24 passes through membrane 21 which entraps active particulate. Fluid passing through reinforced sheet 20 does so in a sectionally indifferent manner. In other words, fluid passes equally through each portion of reinforced sheet 20.

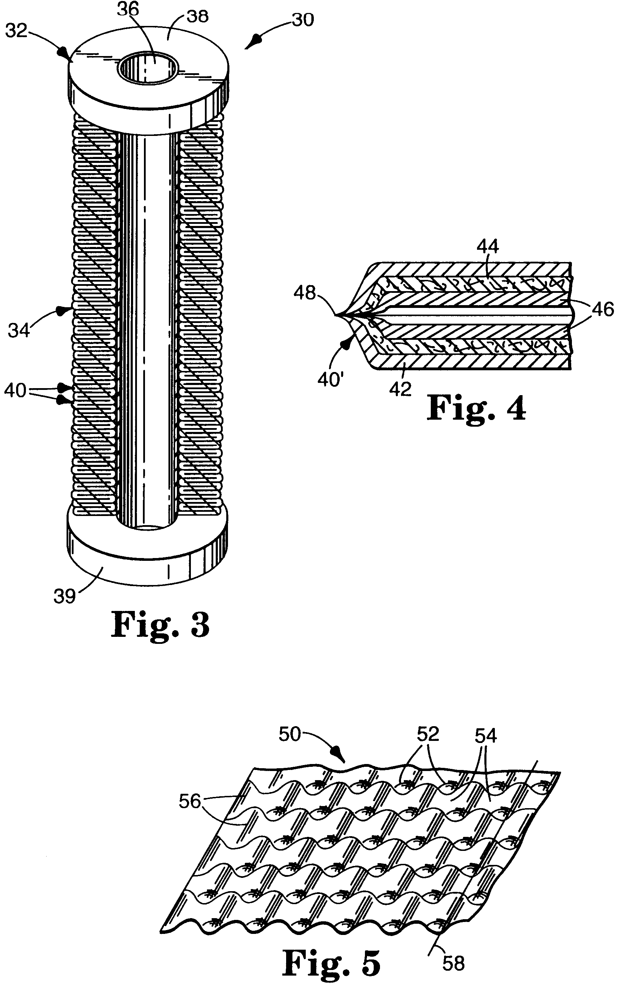

FIG. **3** shows a horizontally pleated cartridge absorber 30 having cartridge housing 32 and binding assembly 34 (half of which is cut away for the sake of explanation). Cartridge housing 32 includes central core 36 and end caps 38 and 39. Core 36 and end caps 38 and 39 can be constructed of a polymer such as polypropylene or nylon, preferably polypropylene. End caps 38 and 39 are attached to core 36 preferably by spinning core 36 at a speed sufficient to spin weld it to end caps 38 and 39. Binding assembly 34 comprises a plurality of sheets 40 that have been edge sealed and opened so as to form a tube of sheets.

Binding assembly 34 can be attached to end caps 38 and 39 by any of a number of techniques as long as a fluid-impervious bond is achieved. Suitable techniques include adhesive attachment, solvent welding, mechanical or thermomechanical attachment, and ultrasonic welding.

This horizontal pleating process and the incorporation of a pleated structure into a cartridge unit are the same as those described in U.S. Patent No. 4,842,739.

FIG. **4** shows a greatly enlarged cross section of one pleat of sheet 40' of binding assembly 34 of the second embodiment of the cartridge device of the present invention (the front edges of the layers being separated from each other for the sake of clarity). Sheet 40' comprises porous outer protective layers 42, particle-loaded fibrillated PTFE membranes 44, and porous inner protective layers 46. These layers are connected at edge seal 48 so as to there form unitary sheet 40' yet maintain their separate identity at all points between edge seal 48 and the edge seal at the opposite side of the pleat (not shown).

Suitable materials for outer protective layer 42 include such porous materials as thermoplastic scrims, thermoplastic spun bond webs, and staple-fiber non-woven webs having thermoplastic binder systems. These are available from a variety of commercial sources including Nalle Plastics, Inc. (Austin, TX), AMOCO Fabrics and Fibers Co. (Atlanta, GA), and Fiberweb Inc. (Pensacola, FL).

Fibrillated PTFE membrane 44 comprises active particulate entrapped within the fibrils thereof. The method of making membrane 44 is the same as that described for membrane 21 of the vertically pleated cartridge absorber (FIG. **1**). Particulate that can be entrapped in the web is also the same as that described previously.

Suitable materials for inner protective layer 46 include such porous materials as finish-free, low debris thermoplastic webs such as spun bond or non-woven webs based on thermally-activated binder fibers. A common example is a spun bond polypropylene web commercially available from a variety of commercial sources including AMOCO Fabrics and Fibers Co. (Atlanta, GA). Inner protective layers 46 and outer protective layers 42 can be made of the same material.

Outer protective layers 42 and inner protective layers 46 aid in the movement of liquid from outside of binding assembly 34 to the interior of central core 36. Without these layers, adjacent particle-loaded fibrillated PTFE membranes 44 tend to collapse upon each other when they are subjected to a pressure drop. This collapsing interferes with the free flow of fluid from outside of to inside of absorbing assembly 34.

If desired, additional layers of particle-loaded fibrillated PTFE membranes and protective layers can be used (with each additional fibrillated PTFE membrane being separated from any previous particle-loaded fibrillated PTFE membrane by at least one protective layer). These additional layers of particle-loaded fibrillated PTFE membranes can contain active particulate that is selective for a different type of species than the particulate used in sheet 44. In this way, a plurality of dissimilar species can be removed by one cartridge absorber.

The various layers of sheet 40' are stacked on each other in the desired order and two opposite edges of these sheets are sealed together by ultrasonic welding or any suitable thermal bonding method known in the art. When half of the layers at one (or both) of the non-sealed edges of this composite are separated from the other half of the layers and the two sealed edges are moved toward each other, one obtains a tube. In other words, the edge sealing converts the layered flat goods into a tubular article. By moving the non-sealed edges toward one another, one can pleat this tube. In this embodiment, the pleats are oriented 90° from those of the vertically-pleated cartridge absorber of FIG. **1**. In other words, the pleats obtained from this process are perpendicular, rather than parallel, to core 36. (Further description of this tube of sheets can be found at col. 4 of U.S. Patent No. 4,842,739.)

FIG. **5** shows a portion of one embodiment of an embossed pattern on a sheet of the absorbing element of the second embodiment of the cartridge absorption device of the present invention. Sheet 50 has a multiplicity of alternating rows of raised 52 and recessed 54 partial cylinders. Adjacent transverse rows of the embossed units are offset from each other by a distance corresponding to the width of the partial cylinder. This displacement results in a series of transverse, wave-shaped lines 56 described by the junction of adjacent rows of partial cylinders which, in turn, define the inward and outward fold lines that create the sheet. The height of the partial cylinder determines the depth of the transverse pleats. Regions where raised partial cylinders transition into recessed partial cylinders describe a series of longitudinal lines 58 that define the fold lines of the primary regular radial pleat pattern that is superimposed on the sheet layer.

A range of diameters of cartridge absorbers can be formed from the same tube of sheets by initiating the inward/outward folding action on non-adjacent longitudinal fold lines 58. For example, by folding on every other longitudinal fold line, a cartridge absorber with a pleat depth twice that obtained from folding on adjacent longitudinal lines. Alternatively, a mixed pattern can be obtained by folding on adjacent and then non-adjacent longitudinal lines.

Cartridge absorbers of the present invention can be checked for leaks by running an aqueous flow/pressure drop test using a standard holder (such as is available from Memtec America Corp.). Flow is commonly directed through the pleated reinforced sheet from the outside-in, although inside-out is also feasible.

In practice, flow rate of the fluid containing the species to be bound will vary depending on the binding rate of the species. Species that bind rapidly allow for higher fluid flow rate. Performance of the cartridge absorber can be determined by monitoring the concentration of the species to be bound at the inlet to and the outlet from the cartridge absorber.

Particulate to be used in a particular sheet will depend on the species to be bound. For example, where the species to be absorbed is an organic contaminant, a preferred particulate is activated carbon. When the carbon particulate has bound as much contaminant as possible, the cartridge absorber is advantageously easily replaced.

Where the bound species is of some value, it can be unbound from the binding particulate by eluting it with a stripping solution. The particle-loaded sheet is then washed with a liquid that will regenerate the particle. This type of binding-stripping-regeneration process can be continued for a number of cycles. In other words, when one cartridge is fully loaded with the bound species, it can be replaced with another while the bound species is eluted therefrom. When the second cartridge is fully loaded, the process is reversed. The advantage to using these cartridge absorbing devices is evident, for example, when one compares them to the normal means for retrieving gold from a cyanide solution.

After gold-containing ore has been mined and crushed, the gold can be leached therefrom with a dilute aqueous alkaline (e.g., pH > 10) cyanide solution. The gold concentration in such solutions is commonly several parts per million (ppm). Such solutions conventionally are concentrated by passing through several vessels (in series) countercurrent to activated carbon in relatively large granular form. In other words, gold-containing solution (with gold normally in the form of a Au(CN)⁻ complex) flows from vessel-to-vessel in one direction while activated carbon granules flow in the opposite direction. This process can require an extended amount of contact time, i.e., up to 24 hours, and can result in gold-containing fines that are generally unrecoverable. The complex is then eluted from the carbon particles with a more alkaline cyanide solution (a process that normally requires at least 8 hours to complete) and retrieved by electrowinning.

In contrast, when granular activated carbon is loaded into a fibrillated PTFE sheet that is incorporated into a cartridge absorber, the time required for the gold-loading step and the time required for the elution step are reduced to about one hour and 15 minutes, respectively. Additionally, no gold-containing fines are generated.

In addition to gold recovery, the method of the present invention can be used for a variety of purposes including the removal of heavy metals from a body of water or an organic liquid, the removal of environmental contaminants from air or a liquid, and the collection of a species of interest or value.

Objects and advantages of this invention are further illustrated by the following examples. The particular materials and amounts thereof, as well as other conditions and details, recited in these examples should not be used to unduly limit this invention.

### EXAMPLES

### Example 1

The particle-loaded fibrillated PTFE membrane described herein is made essentially according to the procedure described at columns 3 to 6 of U.S. Patent No. 4,153,661.

The following materials were added together and the mixture was mixed in a Ross™ mixer (Charles Ross & Son Co.; Hauppage, NY) at 30 rpm for 45 sec at 38°C:
400 g dry super-activated carbon with a surface area of 2000 to 3000 m²/g and an average particle size of 30 µm with a range of 3.9 to 200 µm (Kansai Coke & Chemicals Co.; Amagasaki City, Japan)
312 g FLUON™ PTFE emulsion, 22.6% PTFE in water (ICI Americas, Inc.; Wilmington, DE)
894 g deionized water
This mixing yielded a doughy mass.

This dough-like mass was passed through a two-roll mill. The first few passes resulted in a membrane without enough strength to support its own weight; however, after a few more passes, the membrane was strong enough to maintain its integrity so that it could be folded into three layers and rotated 90° for its next pass through the mill. This biaxial calendering was followed for a total of ten passes. Thereafter, the gap was adjusted from 2.54 mm to 1.27 mm to 0.64 mm (with passes through each gap) to produce a long membrane.

After the above three passes, the membrane was folded into eight layers and rotated 90°. The gap was adjusted from 2.54 mm to 1.90 mm to 1.27 mm to 0.76 mm (with passes through each gap). This process yielded a fibrillated PTFE membrane that was 1.14 mm thick which was dried by passing through a belt oven.

This membrane was reinforced by placing it between two layers of Naltex™ LWS filtration netting (Nalle Plastics, Inc.; Austin, TX) and passing this composite through a two-roll mill (gap = 0.89 mm, roll speed = 7.6 cm/sec). The reinforced sheet was trimmed to a width of 235 mm and vertically pleated on a Rabovsky pleater (Gerard Daniel & Co., Inc.; New Rochelle, NY). The pleated reinforced sheet was longitudinally sealed with DP-100™ quick-setting epoxy resin (3M; St. Paul, MN).

A central core and one end cap (Arcor Inc.; Chicago, IL) were placed on a stand, and the end cap was covered with epoxy resin. The pleated reinforced sheet was placed over the cylinder. The end of the sheet was completely immersed in the aforementioned epoxy. Naltex™ 3408 (Nalle Plastics, Inc.) protective netting in tubular form was slid over the pleated sheet. The other end cap was placed over the pleated sheet and netting which were then sealed into both end caps with epoxy.

### Example 2

A particle-loaded PTFE membrane was prepared in Example 1 with the exception that styrene divinylbenzene was used as the particulate. The membrane had a final PTFE content of about 15% (by weight). The final thickness thereof was 0.5 mm. This membrane was divided in two so as to form two sheets which were then transferred to rolls.

The two rolls of the particle-loaded fibrillated PTFE membrane, two rolls of Typar™ non-woven polypropylene web (Reemay Co.; Old Hickory, TN), and two rolls of Celestra™ non-woven polypropylene web (Fiberweb North America; Greenville, SC) were disposed on winding-unwinding devices (set on unwinding mode) so that several layers could be fed through an edge-sealing device. The order of layers was as follows:
Outer protective material -- Typar™ polypropylene web
Fibrillated PTFE membrane containing styrene divinylbenzene
Inner protective/drainage material -- Celestra™ polypropylene web
Inner protective/drainage material -- Celestra™ polypropylene web
Fibrillated PTFE membrane containing styrene divinylbenzene
Outer protective material -- Typar™ polypropylene web
This multilayer stack was fed through an ultrasonic welder (Branson Ultrasonics Corp.; Danbury, CT) with probes and anvils set 105 mm apart which sealed and slit the stack (i.e., converted the flat goods into a tube with a circumference of approximately 210 mm). The tube walls consisted of an inner layer of Celestra™ polypropylene web, a center layer of fibrillated PTFE membrane, and an outer layer of Typar™ polypropylene web. (Hereinafter, this will be referred to as the "medium".)

This medium was embossed by passing it over a patterned roll in a heated enclosure. The embossed medium was pleated into an accordion-like structure disposed over the core of the cartridge. Polypropylene end caps were spin welded to a polypropylene core, and protective netting (Nalle Plastics, Inc.) was slipped over the outside of the resulting cartridge.

Various modifications and alterations which do not depart from the scope and spirit of this invention will become apparent to those skilled in the art. This invention is not to be unduly limited to the illustrative embodiments set forth herein.

## Claims

1. A cartridge device for removing a species from a fluid comprising:
a) a hollow core;
b) a sheet comprising a particulate-loaded fibrillated polytetrafluoroethylene membrane, said particulate being capable of binding said species, said sheet being pleated and joined to itself so as to form a cylinder that encircles said core;
c) two end caps which slide fit onto said core;
d) means for securing said end caps to said core;
e) optionally, further comprising a porous protective sheath disposed over the outside of said pleats, said sheath being adhesively attached to said end caps;
f) optionally, further comprising gaskets adhered to the exterior of said end caps; and
g) optionally, means to reinforce said sheet,
said end caps being adhesively attached to the ends of said pleated sheet and said species being removed from said fluid by binding with said particulate.

2. The cartridge device of claim 1 wherein said particulate is activated carbon, silica, derivatized silica, intercalated styrene divinylbenzene, ion exchange resins, or chitin.

3. The cartridge device of claim 1 or 2 wherein said pleats are parallel to said core.

4. The cartridge device of claim 3 wherein said connection is accomplished by adhesively joining one edge of said fibrillated polytetrafluoroethylene membrane to the opposite edge thereof.

5. The cartridge device of any of claims 1 to 4 wherein said absorbing sheet further comprises:
a) two layers of a first porous polymeric material;
b) two layers of a second porous polymeric material, both of said layers being between the layers of said first porous polymeric material;
c) a second particulate-loaded fibrillated polytetrafluoroethylene membrane, said particulate being capable of binding said species, each of said membranes being between one layer of said first porous polymeric material and one layer of said second porous polymeric material; and
d) optionally, at least two additional particulate-loaded fibrillated polytetrafluoroethylene membranes, said particulate being capable of binding said species, and two additional layers of a porous polymeric material, said layers and said membranes being stacked so that no two membranes are adjacent,
said layers and said membranes being stacked so as to form a layered construction, said joining being accomplished by edge sealing two opposite edges of said layered construction so that the layers of said construction form a unitary sheet at said sealed edges yet maintain their separate identity at all points between said sealed edges.

6. The cartridge device of claim 5 wherein said first and second porous polymeric materials are the same.

7. The cartridge device of claim 5 or 6 wherein said particulate in said additional membranes is different from said particulate in said first and second membranes.

8. The cartridge device of any of claims 5 to 7 wherein said pleats are perpendicular to said core.

9. A method of removing a species from a fluid comprising the steps:
a) providing the cartridge device of claim 1;
b) allowing or causing a fluid containing said species to flow through said sheet of said cartridge device;
c) allowing said species to be bound by said particulate of said particulate-loaded fibrillated polytetrafluoroethylene membrane;
d) optionally, allowing or causing an eluent to pass through said sheet so as to unbind and remove said chemical species from said cartridge device; and
e) optionally, recharging said particulate by washing said cartridge device with a suitable recharging solution.

10. The method of claim 9 wherein said particulate is activated carbon, said species is a complex of gold, said fluid is a cyanide solution, and said eluent is a cyanide solution that is more alkaline than said first cyanide solution.
